Europäisches Patentamt

European Patent Office

Office européen des brevets

(11) Veröffentlichungsnummer: **0 430 382 A2**

## (12) EUROPÄISCHE PATENTANMELDUNG

(21) Anmeldenummer: 90250275.6

(22) Anmeldetag: 05.11.90

(51) Int. Cl.⁵: **G03B 21/43**

(30) Priorität: 23.11.89 DE 3938983

(43) Veröffentlichungstag der Anmeldung:
05.06.91 Patentblatt 91/23

(84) Benannte Vertragsstaaten:
AT CH DE FR GB IT LI Patentblatt 00/5

(71) Anmelder: ARNOLD & RICHTER CINE
TECHNIK GMBH & CO. BETRIEBS KG.
Türkenstrasse 89
W-8000 München 40(DE)

(72) Erfinder: Haas, Josef
Siemensstrasse 14/6/33
A-1210 Wien(AT)

(74) Vertreter: Ninnemann, Detlef, Dipl.-Ing.
Patentanwälte Maikowski & Ninnemann
Xantener Strasse 10
W-1000 Berlin 15(DE)

(54) Filmtransportvorrichtung.

(57) Filmtransportvorrichtung mit einer von einem Antriebsmotor angetriebenen Filmtransportzahnrolle, deren Zähne mit Spiel in die Perforation eines Laufbildfilmes eingreifen und diesen schrittweise um eine Bildbreite transportieren und an einem Bildfenster endpositionieren. Die Filmtransportschritte sind in eine Transportphase ($t_T$) und eine Positionsregelphase ($t_R$) unterteilt, in der der Film bildgenau endpositioniert wird. Die Transportphase ($t_T$) ist in eine sehr kurze Beschleunigungsphase ($t_1$, $t_2$), in der bei steilem Beschleunigungsanstieg ($t_1$) ein großer Drehmoment-Sollwert ($M_{S1}$) eingestellt ist, und eine lange, kontinuierlich verlaufende Antriebs- und Bremsphase ($t_3$, $t_4$) unterteilt, deren Zeitkonstante ein Vielfaches der Beschleunigungsphase ($t_1$, $t_2$) beträgt. Damit lassen sich minimale Transportgeräusche und ein filmschonender Transport sicherstellen.

FIG.5

EP 0 430 382 A2

# FILMTRANSPORTVORRICHTUNG

Die Erfindung betrifft eine Filmtransportvorrichtung der im Oberbegriff des Anspruchs 1 angegebenen Art.

Aus der DE-PS 27 60 024 ist eine Filmtransportvorrichtung für den Filmtransport eines Filmprojektors mit einer Rotationsblende und einem Antriebsmotor bekannt, auf dessen Welle eine Lochscheibe mit nachgeordneter Steuerschaltung zur Erzeugung von Steuersignalen in Abhängigkeit von der Winkelstellung der Motorwelle angeordnet ist.

Die Steuersignale der Steuerschaltung schalten über einen Leistungsverstärker den Antriebsmotor und werden in drei Bewegungsphasen unterteilt, wobei innerhalb eines ersten Wellendrehwinkels dem Antriebsmotor eine konstante Beschleunigung erteilt wird, in einem zweiten Wellendrehwinkel der Antriesbmotor auf konstante Geschwindigkeit gehalten und in einem dritten Wellendrehwinkel mit konstanter Verzögerung abgebremst wird.

Bei dieser bekannten Filmtransportvorrichtung zum intermittierenden Transport der einzelnen Filmbilder wird ein energieoptimiertes Transportprofil mit einer konstanten Beschleunigung und einer konstanten Verzögerung angestrebt, wobei zwischen beiden Intervallen der Film über einen vorgegebenen Drehwinkel mit konstanter Geschwindigkeit transportiert wird. Dadurch soll eine konstante Filmspannung erzielt und damit Spitzenbelastungen der Filmspannung vermieden werden.

Aufgrund der ruckartigen Übergänge von der Beschleunigungsphase in die Gleichlaufphase mit konstanter Geschwindigkeit und von der Gleichlaufphase in die Verzögerungsphase sind jedoch sowohl erhöhte Belastungen des Films als auch stärkere Geräusche infolge der an die Perforationslochkanten der Filmperforation beim Phasenwechsel anschlagenden Zähne der Filmtransportzahnrolle nicht zu vermeiden. Darüber hinaus führt das Anschlagen der Zähne an die vorderen und hinteren Perforationslochkanten zu einer Beschädigung oder zumindest Deformation der Perforationslochkanten.

Aus der DE-PS 27 22 378 ist eine Filmtransportvorrichtung mit einer von einem Antriebsmotor intermittierend angetriebenen Filmtransportzahnrolle bekannt, deren Zähne mit Spiel in die Perforation des Filmes eingreifen und diesen schrittweise transportieren. Eine Steuervorrichtung steuert den Antriebsmotor der Filmtransportzahnrolle so an, daß dieser den Film um jeweils eine Bildbreite verschiebt. Der Transportvorgang wird bei dieser bekannten Filmtransportvorrichtung durch ein dem Antriebsmotor der Filmtransportzahnrolle zugeführtes Stromprofil bei jedem Bildschritt in eine Beschleunigungsphase, in eine Bremsphase und eine Endpositionierungsphase unterteilt. Dieses zeitoptimierte Transportprofil enthält somit lediglich eine Beschleunigungs- und eine Verzögerungsphase, so daß die Filmbilder in kürzerer Zeit endpositioniert werden können.

Zur Endpositionierung ist ein Markierungsdetektor vorgesehen, der in fester räumlicher Beziehung zu den einzelnen Filmbildern stehende Markierungen auf dem Film abtastet und daraus Steuersignale für den Antriebsmotor erzeugt, so daß der Film je nach Lage der Abweichung der filmfesten Markierung von einer vorgegebenen Sollposition weiter vorwärts oder rückwärts transportiert wird. Daran anschließend wird die Abweichung von der Sollposition erneut detektiert und gegebenenfalls das Endpositionieren des Filmes wiederholt, bis die Sollposition erreicht ist. Als filmfeste Markierung dienen die Perforationslöcher des Films oder auf den Film aufbelichtete Markierungen.

Auch bei diesem Stromprofil findet ein abrupter Übergang von der Beschleunigungs- in die Verzögerungsphase mit der Folge statt, daß die Zähne der Filmtransportzahnrolle beim Phasenübergang wegen des notwendigen Spiels zwischen den Zähnen der Filmtransportzahnrolle und den Perforationslochkanten gegen diese schlägt, wodurch erhebliche Geräusche auftreten und Beschädigungen der Filmperforation die unausbleibliche Folge sind.

Da bei dieser bekannten Filmtransportvorrichtung zur Endpositionierung der Filmbilder der Film je nach Lage der Abweichung der filmfesten Markierung von einer vorgegebenen Sollposition vorwärts und rückwärts transportiert wird, tritt während des Endpositionierungsvorganges ein mehrfaches Anschlagen der Zähne der Filmtransportzahnrolle an die Perforationslochkanten auf, was zu einer weiteren Erhöhung des Geräuschs und Beschädigung der Perforationslochkanten führt.

Dienen die Perforationslochkanten zusätzlich als filmfeste Markierungen, so hat die Beschädigung der Perforationslochkanten des weiteren zur Folge, daß eine nur sehr ungenaue Endpositionierung des Films erfolgt und eine ständige Abweichung des Bildstrichs von der exakten Lage vor dem Bildfenster die Folge ist.

Der Erfindung liegt die Aufgabenstellung zugrunde, eine gattungsgemäße Filmtransportvorrichtung zu schaffen, deren Filmtransportzahnrolle so angetrieben wird, daß ein Minimum an Geräuschen auftritt und gleichzeitig ein filmschonender Transport gewährleistet ist.

Diese Aufgabe wird durch das kennzeichnende Merkmal des Anspruchs 1 gelöst.

Das erfindungsgemäße Transportprofil zum Antrieb der Filmtransportzahnrolle ist unter Berücksichtigung der Geräuscherzeugung und -abgabe optimiert und stellt einen minimalen Geräuschpegel beim Filmtransport sicher. Gleichzeitig wird ein schonender Filmtranport gewährleistet, bei dem jegliches Geräusche und Beschädigungen verursachendes Anschlagen der Zähne der Filmtransportzahnrolle an die Perforationslochkanten des Laufbildfilms vermieden wird.

Dabei geht die Erfindung von der Erkenntnis aus, daß beim Übergang von der Antriebsphase in die Bremsphase ein maximaler Geräuschpegel auftritt. Durch einen sanften, d.h. kontinuierlich langsamen Übergang von der Antriebsphase in die Bremsphase kann dieser kritische geräuschverursachende Bereich wesentlich leiser gemacht werden.

Die Geräuscherzeugung in der Beschleunigungsphase ist weniger kritisch, so daß eine erhebliche Steigerung des Beschleunigungssollwertes, d.h. größere Steilheit des Beschleunigungsanstieges und ein größeres gesamtes Drehmoment in der Antriebsphase zu keiner merklichen Erhöhung des Geräuschpegels führt.

Um die Zeitdauer von 10 ms zur Durchführung eines vollständigen Filmtransportschrittes einzuhalten, wird daher das Transportprofil derart verschoben, daß ein sehr langsamer Übergang von der Antriebsphase in die Bremsphase auftritt, der jegliches Anschlagen der Zähne an die Perfo rationslochkanten des Films und damit Flattergeräusche oder dgl. vermeidet.

Durch den langsamen, kontinuierlichen Übergang in Verbindung mit einer langgezogenen Antriebs- und Bremsphase, in der das Drehmoment auf Null reduziert wird, negative Werte annimmt und dann kontinuierlich in die aperiodische Positionsregelphase übergeht, wird nicht nur das beim Filmtransport erzeugte Geräusch minimiert, sondern auch ein filmschonender Betrieb infolge der kontinuierlichen, der Filmbewegung angepaßten Beschleunigung bzw. Geschwindigkeit der Filmtransportzahnrolle sichergestellt, bei dem die Perforationslochkanten keiner wesentlichen Beanspruchung ausgesetzt sind.

Da die eigentliche Beschleunigungsphase keinen wesentlichen Beitrag zur Geräuschabgabe während eines Filmtransportschrittes leistet, werden die Beschleunigungskräfte erhöht und damit die Beschleunigungsphase deutlich verkürzt, um die längere Übergangsphase von der Antriebsphase in die Bremsphase zu kompensieren und gleichwohl den Film innerhalb der zur Verfügung stehenden Zeitdauer von 10 ms bildgenau vor dem Bildfenster zu positionieren.

Da zu Beginn des Filmtransportschrittes, d.h. zu Beginn des steilen Beschleunigungsanstiegs die Zähne der Filmtransportzahnrolle an der Anfahr-Perforationskanten des Films wegen des aperiodischen Regelvorgangs in der Positionsregelphase des vorangegangenen Filmtransportschrittes, bei der der Film in die Endposition gezogen wird, fest anliegen, wird trotz der starken Beschleunigungskräf te kein Schlag auf die Perforationslochkanten ausgeübt. Somit treten keine dynamischen Beanspruchungen höherer Ordnung in Form einer ruckartigen Bewegung an den Perforationslochkanten auf, so daß ein filmschonender Filmtransport über den gesamten Filmtransportschritt sichergestellt ist.

In der Bremsphase liegen die mit der Filmperforation in Eingriff befindlichen Zähne der Filmtransportzahnrolle locker an den in Transportrichtung vorderen Kanten der Perforationslochkanten an und bewegen sich mit der Bewegungsgeschwindigkeit des Films mit. Dabei ist das Transportprofil in der Bremsphase so eingestellt, daß unter Berücksichtigung der Reibungsverhältnisse im Filmkanal sich die Zähne der Filmtransportzahnrolle allenfalls mit Spiel innerhalb der Perforationslochkanten befinden, ohne aber an die Perforationslochkanten anzuschlagen.

Am Ende der Bremsphase werden auch für den Fall, daß sich die Zähne der Filmtransportzahnrolle mit Spiel innerhalb der Perforationslochkanten befinden, durch einen sanften Anstieg des Drehmoments die in Eingriff mit der Filmperforation befindlichen Zähne an die in Transportrichtung vorderen Kanten der Perforationslochkanten angelegt und ein sanfter Übergang in die aperiodische Positionsregelphase zur Endpositionierung des Filmbildes geschaffen wird.

In der Positionsregelphase befinden sich die Zähne der Filmtransportzahnrolle an den in Bewegungsrichtung vorderen Perforationslochkanten, da sie unter Berücksichtigung der Reibungsverhältnisse im Filmkanal den Film kontinuier lich in die Endlage hineinziehen. Dabei stellt das eingestellte Transportprofil sicher, daß der Film nicht der Bewegung der Filmtransportzahnrolle vorauseilt sondern durch die Filmtransportzahnrolle in die korrekte Endposition gezogen wird.

Zur Optimierung der Regelung der Filmtransportschritte, insbesondere zur Schaffung definierter Verhältnisse am Ende der Transportphase und zu Beginn der Positionsregelphase wird zusätzlich eine adaptive Regelung durchgeführt, bei der die Regelabweichung des Drehmoments am Ende der Transportphase erfaßt und der Regler zu Beginn des folgenden Filmtransportschrittes mit einem Drehmoment-Sollwert beaufschlagt wird, der im Sinne einer Reduzierung der Regelabweichung bemessen ist. Damit wird zusätzlich ein ebenfalls sanfter Übergang von der Bremsphase in die Positonsregelphase sichergestellt.

Vorteilhafte Ausgestaltungen und Weiterbildungen der Erfindung sind in den Unteransprüchen gekennzeichnet.

Die Erfindung wird nachstehend an Hand der in der Zeichnung dargestellten Ausführungsbeispiele näher erläutert. Es zeigen:

Figur 1 eine schematisch-perspektivische Darstellung der Filmtransportvorrichtung eines Filmprojektors;

Figur 2 einen Querschnitt durch eine Filmtransporteinrichtung mit einer Filmtransportzahnrolle;

Figur 3 eine Draufsicht auf eine in eine Filmperforation eingreifende Zahnreihe einer Filmtransportzahnrolle;

Figur 4 eine schematische Darstellung eines Zahns der Filmtransportzahnrolle in der Transport- und Positionsregelphase und

Figur 5 den Verlauf der Drehmomentvorgabe für den Antrieb der Filmtransportzahnrolle über der Zeit.

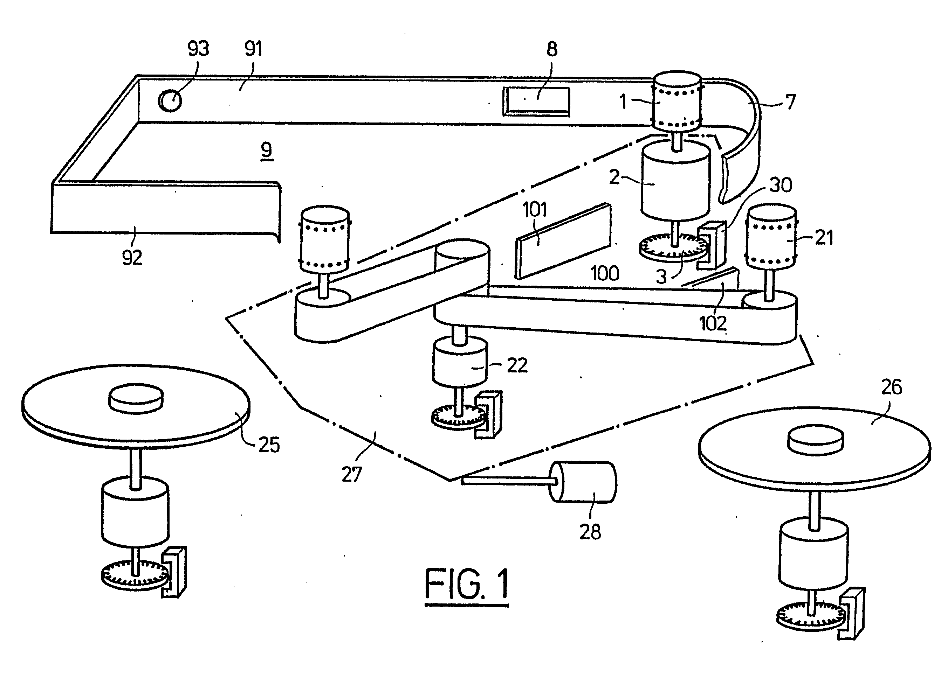

Die in Figur 1 dargestellte schematisch-perspektivische Ansicht der Filmtransportvorrichtung eines Filmprojektors zeigt eine Filmtransporteinrichtung mit einer Filmzahnrolle 1, einem Antriebsmotor 2 und einer Winkelgeberscheibe 3, die Vor- und Nachwickeleinrichtungen 20, 21, die von einer gemeinsamen Antriebseinrichtung 22 angetrieben werden, die die Filmspulen tragenden Wickeleinrichtungen 25, 26 sowie in vereinfachter schematischer perspektivischer Darstellung die zur Aufnahme der Filmschleifen zu beiden Seiten des Bildfensters 8 dienenden Filmschleifenkanäle 9, 100.

Der aus einem hochdynamischen Gleichstromservomotor bestehende Antriebsmotor 2 überträgt seine Drehbewegung über die direkt angetriebene Filmtransportzahnrolle 1 auf den Film. Über eine Welle ist der Antriebsmotor 2 fest mit der Winkelgeberscheibe 3 verbunden, so daß mittels einer optoelektronischen Positions-Abtasteinrichtung 30 die exakte Stellung des Antriebsmotors 2 erfaßt und weitergeleitet werden kann.

Die Filmschleifenkanäle 9, 100 dienen zur Aufnahme der zu beiden Seiten des Bildfensters 8 gebildeten Filmschleifen, wobei eine Schleifenmeßeinrichtung 93 in dem links vom Bildfenster 8 angeordneten Filmschleifenkanal 9 vorgesehen ist. Die Schleifenmeßeinrichtung 11 kann aus einer Reflektionslichtschranke oder einer Leuchtdiode in Verbindung mit einem gegenüberliegenden Fototransistor bestehen.

Der Filmschleifenkanal 9 wird durch zwei Filmschleifenkanalwände 91, 92 gebildet, wobei die eine Filmschleifenkanalwand 91 das Bildfenster 8 enthält und im Bereich der Filmtransportzahnrolle 1 als Filmkufe 7 ausgebildet ist, die den Film um die Filmtransportzahnrolle lenkt.

Ein in entsprechenden Führungen gelagerter Zustellschlitten 27 wird von einem Zustellmotor 28 angetrieben und trägt die Abbildungsoptik, die Filmtransporteinrichtung einschließlich einer Filmbühne mit Filmandrückplatte, die Vor- und Nachwickeleinrichtungen 20, 21, eine Schwenkkufe sowie die Antriebseinrichtung 22.

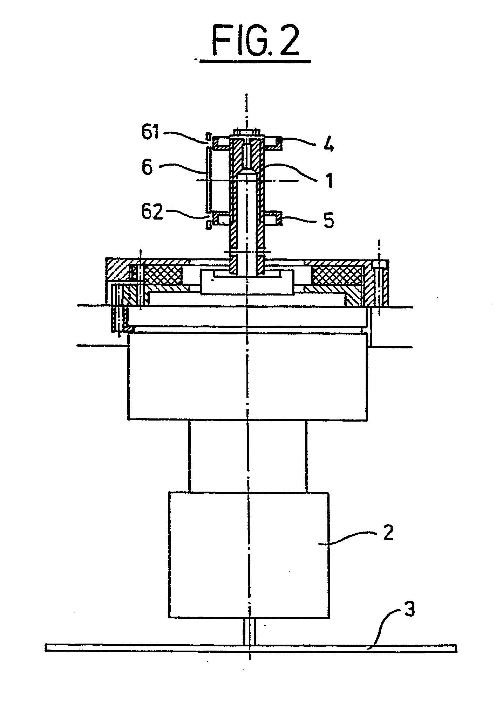

Der in Figur 2 dargestellte Querschnitt durch eine Filmtransporteinrichtung zeigt eine mit 2 Zahnkränze 4, 5 versehene Filmtransportzahnrolle, die fest mit der Welle eines Antriebsmotors 2 gekoppelt ist, auf dessen Welle auch eine Winkelgeberscheibe 3 zur exakten Positionierung des Antriebsmotors 2 angeordnet ist. Der obere und untere Zahnkranz 4, 5 der Filmtransportzahnrolle 1 greift in entsprechende Perforationsreihen 61, 62 eines Films 6 ein, wobei der Eingriff durch eine nicht näher dargestellte Führung in Form einer Filmkufe oder dergleichen herbeigeführt wird.

Dabei erfolgt der Eingriff der Zähne der Filmtransportzahnrolle 1 in die Filmperforation über einen von der Filmbahn abhängigen Umfangsbereich der Filmtranportzahnrolle, so daß mehrere Zähne jedes Zahnkranzes 4, 5 der Filmtransportzahnrolle 1 gleichzeitig in entsprechende Perforationslöcher der Filmperforation eingreifen. Üblicherweise greifen gleichzeitig 4 bis 6 Zähne der Filmtransportzahnrolle 1 in die Filmperforation ein.

Außerdem erfolgt der Eingriff der Zähne der Filmtransportzahnrolle 1 in die Filmperforation unter Einhaltung eines bestimmten Spiels, d.h., die Zahndicke der Zähne der Filmtransportzahnrolle 1 ist geringer als die Perforationsweite. Auf diese Weise wird vermieden, daß die Zähne der Filmtransportzahnrolle 1 an den Perforationsflanken beidseitig anliegen, was wegen der Filmspannung zu einer Beschädigung der Filmperforation und zu einem erhöhten Geräuschpegel führen würde.

Dieses Spiel zwischen den Zähnen der Filmtransportzahnrolle 1 und der Filmperforation führt aber auch bei Einhaltung einer vorbestimmten Filmspannung zu ungenauer Positionierung der einzelnen Filmbilder vor dem Bildfenster 8, so daß der Vorteil einer exakten Positionierung mit Hilfe eines Winkelgebersystems für den Antriebsmotor 2 durch diese ungenaue Führung des Films 6 beseitigt wird.

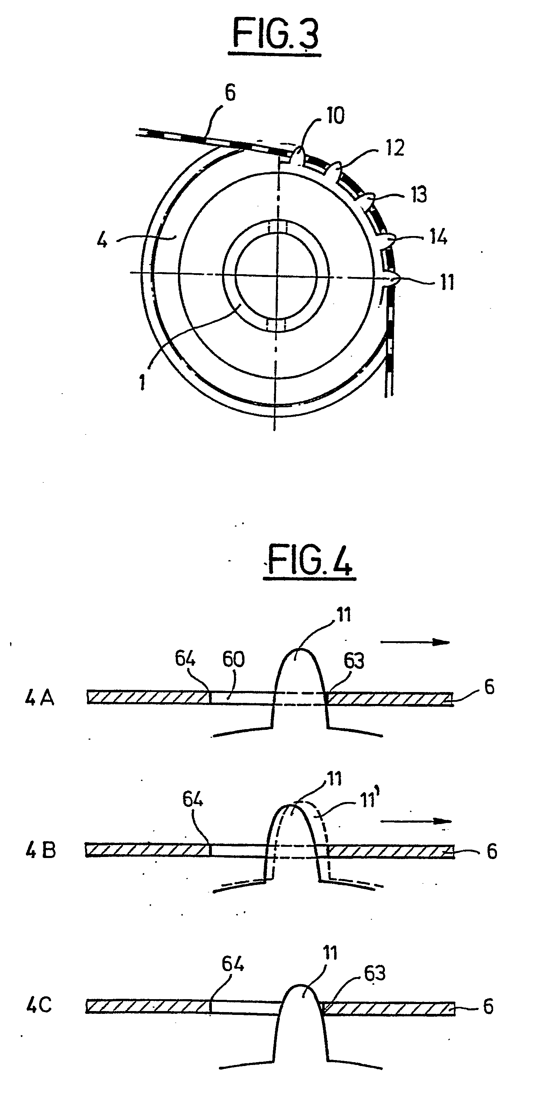

Um die genaue Positionierung des Films, die durch die Verwendung eines Antriebsmotors für die Filmtransportzahnrolle mit einem Winkelgebersystem geschaffen wird, auf die Positionierung des Films vor dem Bildfenster zu übertra gen, wird die Bewegung des Films 6 vor der Projektion eines Filmbildes so eingestellt, daß die in Drehrichtung der Filmtransportzahnrolle 1 vordere Flanke mindestens eines Zahns 10 bis 14 der Filmtransportzahnrolle 1 gemäß Figur 3 an der Vorderkante mindestens eines Perforationslochs der Filmperforation im Augenblick der Projektion eines Filmbildes anliegt.

In Figur 3 handelt es sich hierbei um den an der Eingriffsgrenze liegenden Zahn 11, der an der Vorderflanke eines entsprechenden Perforationsloches der Filmperforation des Films 6 anliegt.

Zur Verdeutlichung des Bewegungsablaufs der Filmtransportzahnrolle und des Films während eines Bildschrittes zeigt Figur 4 in einer schematischen Darstellung die Lage eines Zahnes 11 der Filmtransportzahnrolle 1 in Bezug auf ein Perforationsloch 60 des zu transportierenden Filmes 6.

In der Beschleunigungs- und Antriebsphase (Figur 4 A) liegt mindestens ein Zahn 11 der in Eingriff mit der Filmperforation 61, 62 befindlichen Zähne 10 bis 14 der Filmtransportzahnrolle gemäß Figur 3 an der in Transportrichtung vorderen Kante 63 eines Perforationsloches 60 an und beschleunigt den Film 6 bis zur maximalen Geschwindigkeit, wobei die Filmtransportrichtung durch einen Pfeil schematisch dargestellt ist.

In der Bremsphase liegt der Zahn 11 locker an der Vorderkante 63 des Perforationsloches 60 an oder der Zahn 11′ befindet sich mit Spiel innerhalb des Perforationsloches 60 (Figur 4 B). Dabei wird die Filmtransportzahnrolle 1 so bewegt, daß sie der Bewegung des Filmes 6 nach dessen Beschleunigung folgt, ohne dem Film 6 eine Zusatzbeschleunigung zu erteilen bzw. durch Anschlagen an die rückwärtige Kante 64 des Perforationsloches 60 abzubremsen.

Schließlich liegt in der Positionsregelphase gemäß Figur 4C der Zahn 11 der Filmtransportzahnrolle 1 an der Vorderkante 63 des Perforationsloches 60 an, auch wenn er zuvor in der Bremsphase mit Spiel 11′ innerhalb des Perforationsloches 60 mitbewegt wurde. In der Positionsregelphase wird der Film aperiodisch in die Endposition gezogen, in der er mit dem Bildfenster des Filmkanals fluchtet und zur Vermeidung von Höhenbildstandsfehlern eine stets exakt gleiche Lage einnimmt.

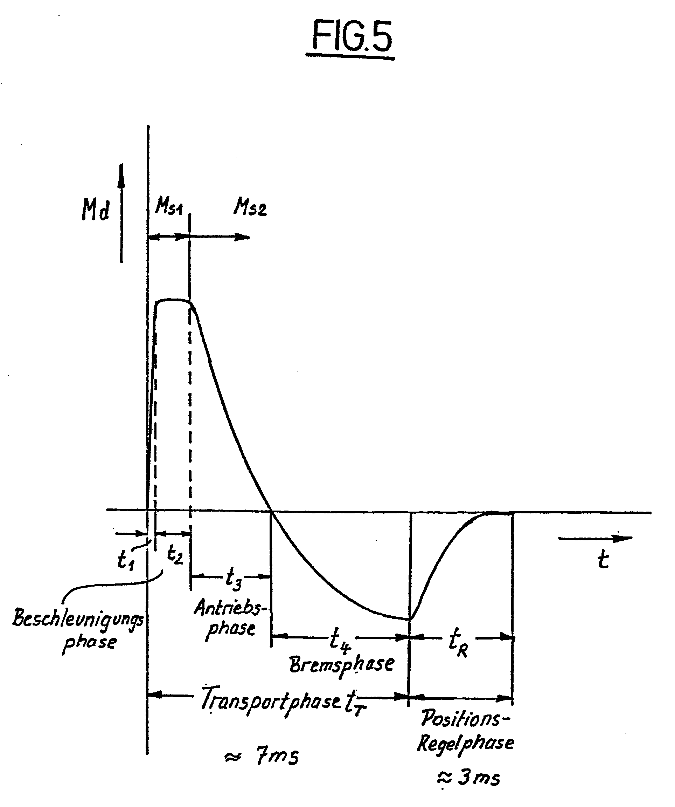

Figur 5 verdeutlicht anhand einer zeitlichen Darstellung der Drehmomentvorgabe für den Antriebsmotorregler die Verhältnisse während eines Filmtransportschrittes. Dabei kann das auf der Ordinate aufgetragene Drehmoment durch das dem Antriebsmotor zugeführte Stromprofil ersetzt werden.

Wie der Darstellung gemäß Figur 5 zu entnehmen ist, setzt sich ein Filmtransportschritt aus einer Transportphase $t_T$ und einer Positionsregelphase $t_R$ zusammen. Die Transportphase $t_T$ setzt sich aus einer Beschleunigungsanstiegsphase $t_1$ und einer Phase angenähert konstanter Beschleunigung $t_2$ sowie einer Antriebsphase $t_3$ und einer Bremsphase $t_4$ zusammen.

Während der Beschleunigungsphase $t_1$, $t_2$ wird ein erster Drehmoment-Sollwert $M_{S1}$ vorgegeben, der erheblich über der Drehmomentvorgabe üblicher Transportprofile liegt.

In der Antriebs- und Bremsphase $t_3$, $t_4$ wird mindestens ein zweiter Drehmoment-Sollwert $M_{S2}$ vorgegeben. Bevorzugt wird jedoch das gesamte Transportprofil punktförmig in einem Speicher abgespeichert und bei jedem Filmtransportschritt abgerufen.

Zur Positionierung eines Filmbildes vor dem Bildfenster eines Projektors steht eine Zeitdauer von 10 ms zur Verfügung, um eine ausreichende Belichtungszeit für jedes Filmbild bei einer Filmgeschwindigkeit von 24 Bildern/Sekunde sicherzustellen. Von dieser Zeitdauer eines Filmtransportschrittes stehen ca. 7 ms für die Transportphase $t_T$ und die verbleibenden 3 ms für die aperiodische Regelung in der Positionsregelphase $t_R$ zur Verfügung.

Die Sollwertvorgabe in der Beschleunigungsphase $t_1$, $t_2$ bzw. punktförmige Sollwertvorgabe in der Antriebs- und Bremsphase $t_3$, $t_4$ erfolgt gemäß Figur 5 in der Weise, daß ein kurzer steiler Beschleunigungsanstieg innerhalb der Phase $t_1$ erfolgt, der eine verhältnismäßig kurze Phase konstanter Beschleunigung $t_2$ folgt. Daran schließt sich ein sanfter Übergang von der Antriebsphase $t_1$, $t_2$ in die Bremsphase $t_3$, $t_4$ an, der dadurch erzielt wird, daß der Abfall der Beschleunigungsvorgabe gering und kontinuierlich verlaufend ist.

Nach dem Zeitpunkt $t_3$ kehrt die Beschleunigungs-Sollwertvorgabe das Vorzeichen um und leitet die Bremsphase $t_4$ ein. Am Ende der Bremsphase $t_4$ setzt die aperiodische Regelung der Positionsregelphase $t_R$ ein bis das Filmbild in der exakten Sollage steht.

Wie der Darstellung gemäß Figur 5 deutlich zu entnehmen ist, beträgt die Zeitdauer $t_3$, $t_4$ der Antriebs- und Bremsphase ein Vielfaches der Zeitdauer $t_1$, $t_2$ der Beschleunigungsphase, so daß eine hohe, steile Beschleunigung zur Verkürzung der Beschleunigungsphase erzielt wird, um ausreichend Zeit zu gewinnen für den sanften Übergang von der Antriebsphase in die Bremsphase sowie ein behutsames Abbremsen des Films vor Einleiten der aperiodischen Regelung der Positionsregelphase.

Am Ende der Bremsphase $t_4$ vor Einleiten der Positionsregelphase $t_R$ wird die Regelgröße erfaßt und ihre Abweichung von einem vorgegebenen Sollwert als Vorgabe für den nachfolgenden Filmtransportschritt oder eine Reihe nachfolgender Filmtransportschritte verwendet. Mit dieser adaptiven Regelung wird der Bewegungsablauf des Films während einer Vielzahl von Filmtransportschritten optimiert, so daß am Ende der Bremsphase $t_3$ definierte Verhältnisse vorliegen, die eine aperiodische Bewegung des Films in der Positionsregelphase ermöglichen. Damit soll ein Überschwingen in der Positionsregelphase verhindert und ein sanfter, kontinuierlicher Bewegungsablauf in der Positionsregelphase sichergestellt werden.

Die Erfassung der Regelgröße am Ende der Bremsphase $t_4$ und deren Vergleich mit einem vorgegebenen Sollwert führt zu einer Verlagerung der gesamten Drehmomentkurve im Sinne eines Offset, so daß beispielsweise bei einer zu geringen Beschleunigung in der Beschleunigungsphase mit einer daraus resultierenden starken Regelabweichung am Ende der Bremsphase im nachfolgenden Filmtransportschritt ein grö ßerer Sollwert für das Drehmoment in der Beschleunigungsphase vorgegeben wird und am Ende der Bremsphase $t_4$ eine Regelgröße ansteht, die in einem gewünschten Toleranzbereich liegt. Daran anschließend wird durch Spannungsvorgabe in der Positionsregelphase die Endpositionierung des Filmbildes vorgenommen.

Die adaptive Regelung des Drehmoments gewährleistet, daß beim Übergang der Bremsphase in die Positionsregelphase kein ruckartiges Beschleunigen des Films auftritt und somit ein sanfter Übergang auch bei diesen beiden Phasen sichergestellt ist. Damit wird der filmschonende und stark geräuschmindernde Effekt der erfindungsgemäßen Lösung verstärkt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen. Insbesondere beschränkt sich die Ausführung nicht auf die Realisierung mit diskreten logischen Baugruppen, sondern läßt sich vorteilhaft auch mit programmierter Logik - vorzugsweise unter Verwendung eines Mikroprozessors - realisieren.

## Ansprüche

1. Filmtransportvorrichtung mit einer von einem Antriebsmotor angetriebenen Filmtransportzahnrolle, deren Zähne mit Spiel in die Perforation eines Laufbildfilmes eingreifen und diesen schrittweise um eine Bildbreite transportieren und an einem Bildfenster endpositionieren, wobei jeder Bildschritt in eine auf den Film einwirkende Transport- und Positionsregelphase unterteilt ist,
**dadurch gekennzeichnet,**
daß die Transportphase ($t_T$) aus einer kurzen Beschleunigungsphase ($t_1$, $t_2$) mit einem steilen Beschleunigungsanstieg ($t_1$) bzw. großen Drehmoment-Sollwert ($M_{S1}$) und einer langen, kontinuierlich verlaufenden Antriebsphase ($t_3$) und Bremsphase ($t_4$) zusammengesetzt ist, deren Zeitkonstante ein Vielfaches der Beschleunigungsphase ($t_1$, $t_2$) beträgt.

2. Filmtransportvorrichtung nach Anspruch 1 , **dadurch gekennzeichnet,** daß der Antriebsmotor-Regler über die gesamte Transportphase ($t_T$) mit einem Drehmoment-Sollwert ($M_{S1}$, $M_{S2}$) beaufschlagt ist, daß in der Beschleunigungsphase ($t_1$, $t_2$) dem Antriebsmotor-Regler ein hoher Drehmoment-Sollwert ($M_{S1}$) zugeführt und dieser über eine kurze Zeitspanne ($t_2$) im wesentlichen konstant gehalten wird, und daß der Drehmoment-Sollwert ($M_{S2}$) in der Antriebs- und Bremsphase ($t_3$, $t_4$) angenähert linear reduziert wird, ohne Sollwertsprung in einen nega tiven Drehmoment-Sollwert (Verzögerungsmoment) und kontinuierlich in die Positionsregelphase ($t_R$) übergeht.

3. Filmtransportvorrichtung nach Anspruch 2, **gekennzeichnet durch** eine geringe zeitliche Änderung des Drehmoments ($M_d$) beim Übergang von der Beschleunigungsphase ($t_1$, $t_2$) in die Antriebsphase ($t_3$).

4. Filmtransportvorrichtung nach Anspruch 2 oder 3, **dadurch gekennzeichnet,** daß der Drehmoment-Sollwert ($M_{S1}$, $M_{S2}$) in der Beschleunigungsphase ($t_1$, $t_2$), in der Antriebsphase ($t_3$) und in der Bremsphase ($t_4$) punktweise gespeichert ist.

5. Filmtransportvorrichtung nach einem der vorangehenden Ansprüche, **dadurch gekennzeichnet,** daß in der Beschleunigungsphase ($t_1$, $t_2$) die in Eingriff mit der Filmperforation (60) befindlichen Zähne (10 bis 14) der Filmtransportzahnrolle (1) mit ihren in Bewegungsrichtung vorderen Kanten an den in Bewegungsrichtung vorderen Perforationslochkanten (63) anliegen, daß in der Antriebs- und Bremsphase ($t_3$, $t_4$) die in Eingriff mit der Filmperforation (60) befindlichen Zähne (10 bis 14) der Filmtranportzahnrolle (1) entweder mit Spiel in der Filmperforation (60) mitgeführt sind oder mit ihren in Bewegungsrichtung vorderen Kanten an den in Bewegungsrichtung vorderen Perforationslochkanten (63) anliegen, und daß in der Positionsregelphase ($t_R$) die Zähne (10 bis 14) der Filmtransportzahnrolle (1) mit ihren in Bewegungsrichtung vorderen Kanten an den in Bewegungsrichtung vorderen Perforationslochkanten (63) anliegen, so daß der Film (6) aperiodisch in die bildgenaue Endposition gezogen wird.

6. Filmtransportvorrichtung nach einem der vorangehenden Ansprüche, **dadurch gekennzeichnet,** daß die Drehmoment-Sollwertvorgabe so eingestellt ist, daß in der Antriebs- und Bremsphase ($t_3$, $t_4$) die in Eingriff mit der Filmperforation (60) befindlichen Zähne (10, 11, 12, 13, 14) der Filmtransportzahnrolle (1) unter Berücksichtigung der Reibungsverhältnisse im Filmkanal an den vorderen Perforationslochkanten (63) der Filmperforationslöcher (60) anliegen.

7. Filmtransportvorrichtung nach einem der vorangehenden Ansprüche, **dadurch gekennzeichnet,** daß am Ende der Transportphase ($t_T$) die Abweichung der Drehmoment-Regelgröße von einem vorgegebenen Wert erfaßt und zu Beginn des folgenden Filmtransportschrittes oder der folgenden Filmtransportschritte ein Drehmoment-Sollwert ($M_{S1}$, $M_{S2}$) vorgegeben wird, dessen Betrag im Sinne einer Reduzierung der Abweichung der Drehmoment-Regelgröße von dem vorgegebenen Wert bemessen ist.

8. Filmtransportvorrichtung nach Anspruch 7, **dadurch gekennzeichnet,** daß die Regelabweichung am Ende des folgenden Filmtransportschrittes oder der folgenden Filmtransportschritte auf den Wert Null geregelt wird.

FIG. 1

# FIG.2

# FIG.3

# FIG.4

# FIG.5